# EUROPEAN PATENT APPLICATION

(11) **EP 3 885 209 A1**
(43) Date of publication of application: **29.09.2021**
(21) Application number: 19911049.5
(22) Date of filing: 28.06.2019
(51) Int. Cl.: B60S 3/00, H04L 29/08

(54) **VEHICLE WASHING SYSTEM BASED ON INTERNET OF THINGS, AND VEHICLE WASHING METHOD**

(30) Priority: 21.01.2019 CN 201910052884
(71) Applicant: Guangzhou Xiaopeng Motors Technology Co., Ltd., Guangzhou (CN)
(72) Inventor: LIU, Yu, Guangzhou, Guangdong 510000 (CN); LAI, Yi, Guangzhou, Guangdong 510000 (CN); FU, Qunyu, Guangzhou, Guangdong 510000 (CN); LIANG, Guihao, Guangzhou, Guangdong 510000 (CN)
(74) Representative: Yip, Matthew Wing Yu
(86) International application number: PCT/CN2019/093456
(87) International publication number: WO 2020/151186

(57) **Abstract**

An Internet of Things based car washing system and car washing method. The system comprises: a vehicle terminal (103), a car washer (101), and a server (102). The vehicle terminal (103) is configured to display a car washing page according to a service authorization message. The car washer (101) is configured to detect whether the vehicle has been parked into a car washing area preset by the car washer (101), and if so, to send a vehicle parking success message to the server (102). The server (102) is configured to acquire a user account corresponding to the vehicle and to send a service authorization message to a vehicle terminal (103) corresponding to the user account.

## Description

### Field of Invention

The present invention relates to Internet of Things (IoT) and, in particular, to an IoT based car washing system and car washing method.

### Background

As the number of private automobiles increases, the car washing industry has transitioned from conventional manual car washing to car washing by machines. This does not only represent a change of consumer habits, but also a new era of automation of the car washing industry. Currently, most car washing schemes include vehicle parking, car washing, fee payment, and vehicle departure. Performance of these processes still relies heavily on human assistance, which hinders automation of car washing, and renders car washing inefficient and user experience poor.

### Summary of Invention

The present invention discloses an IoT based car washing system and a car washing method, which can improve car washing efficiency and improve user experiences.

In accordance with a first aspect of the present invention, there is provided an IoT based car washing system, the system comprising a vehicle terminal installed on a vehicle, a car washer, and a server, wherein:
the server is configured to acquire a user account corresponding to the vehicle and to send a service authorization message to a vehicle terminal corresponding to the user account;
the vehicle terminal is configured to output and display a car washing page according to the service authorization message for a user to perform authorization of a car washing service on the car washing page;
the car washer is configured to detect whether the vehicle has been parked in a car washing area preset by the car washer and, upon detecting that the vehicle has been parked in the car washing area, to send a vehicle parking success message to the server;
the server is further configured to send a car washing preparation message to the vehicle terminal upon detecting that the car washing service has been authorized and that a vehicle parking success message sent by the car washer has been received;
the vehicle terminal is further configured to, upon receiving the car washing preparation message, detect whether hardware devices of the vehicle are in car washing preparation states, and upon detecting that the hardware devices are in the car washing preparation states, send a safety check success message to the server;
the server is further configured to send a car washing request message to the car washer upon receipt of the safety check success message; and
the car washer is further configured to start the car washing service for the vehicle upon receipt of the car washing request message.

According to the first aspect of the present invention, in a preferred embodiment:
the car washer is further configured to capture an image of a license plate of the vehicle and send the image of the license plate to the server upon detecting entry of the vehicle into a predetermined license plate identification area; and
the server is configured to acquire the user account corresponding to the vehicle by recognizing the license plate in the image of the license plate.

According to the first aspect of the present invention, in a preferred embodiment:
the car washer is further configured to send a vehicle parking failure message to the server upon detecting that the vehicle is not parked in the car washing area;
the server is further configured to, upon receiving the vehicle parking failure message, forward the vehicle parking failure message to the vehicle terminal; and
the vehicle terminal is further configured to, upon receiving the vehicle parking failure message, output a driving assistance message for guiding the user to drive the vehicle into the car washing area, and upon receiving the car washing preparation message, output a parking reminder message for reminding the user to control the vehicle to enter a parking state.

According to the first aspect of the present invention, in a preferred embodiment:
after receiving the safety check success message sent by the vehicle terminal, and prior to sending a car washing request message to the car washer, create a car washing order for the car washing service; and
deduct a fee from a deposit account associated with the user account based on the car washing order, and, when the fee deduction is successful, perform the operation of sending a car washing request message to the car washer.

According to the first aspect of the present invention, in a preferred embodiment:
the vehicle terminal is further configured to send a car washing service package query to the server upon receipt of the car washing preparation message;
the server is further configured to query at least one car washing service package corresponding to the car washer and send the at least one car washing service package to the vehicle terminal upon receiving a car washing service package query sent by the vehicle terminal;
the vehicle terminal is further configured to output the at least one car washing service package for display, detect a target service package selected by the user from the at least one car washing service package, and send the target service package to the server; and
the server is configured to create the car washing order for the car washing service by creating a car washing order for the car washing service corresponding to the target service package.

According to the first aspect of the present invention, in a preferred embodiment:
the car washer is configured to report car washing progress information of the car washing service to the server in real time in the course of the car washing service; and
the server is configured to synchronize the car washing progress information to the vehicle terminal for display.

According to the first aspect of the present invention, in a preferred embodiment:
the car washer is further configured to send a service completion message to the server at the end of the car washing service; and
the vehicle terminal is further configured to receive the service completion message forwarded by the server, and upon receiving the service completion message, output a departure reminder message to remind the user to drive the vehicle away.

According to the first aspect of the present invention, in a preferred embodiment:
the car washer is further configured to detect whether the vehicle has exited the car washing area, and, upon detecting the vehicle exiting the car washing area, send a vehicle departure message to the server; and
the server is further configured to, upon receiving the vehicle departure message, update a status of the car washing order corresponding to the car washing service.

According to the first aspect of the present invention, in a preferred embodiment:
the vehicle terminal is further configured to send a car washing point search message to the server upon detecting a car washing point search command entered by the user;
the server is further configured to, upon receiving a car washing point search message sent by the vehicle terminal, search for nearby car washing points with a distance from the vehicle's current location smaller than a preset threshold distance and send information of the nearby car washing points to the vehicle terminal, wherein the vehicle's current location is reported by the vehicle terminal; and
the vehicle terminal is further configured to receive and output information of at least one car washing point sent by the server and detect a target car washing point selected by the user from the at least one car washing point, and navigate according to a location of the target car washing point and the vehicle's current location to allow the vehicle to travel to the target car washing point based on navigation information.

In accordance with a second aspect of the present invention, there is provided a car washing method, which comprises:
acquiring, by a server, a user account corresponding to a vehicle and sending a service authorization message to a vehicle terminal corresponding to the user account;
outputting and displaying, by the vehicle terminal, a car washing page according to the service authorization message for a user to perform authentication of a car washing service on the car washing page;
detecting, by a car washer, whether the vehicle has been parked in a car washing area preset by the car washer and, if so, sending a vehicle parking success message to the server;
sending, by the server, a car washing preparation message to the vehicle terminal upon detecting that the car washing service has been authorized and that a vehicle parking success message sent by the car washer has been received;
detecting, by the vehicle terminal, upon receiving the car washing preparation message, whether hardware devices of the vehicle are in car washing preparation states and, if so, sending a safety check success message to the server;
sending, by the server, a car washing request message to the car washer upon receipt of the safety check success message; and
starting, by the car washer, the car washing service for the vehicle upon receipt of the car washing request message.

A processor executes executable program code stored in a memory device, which results in performance of the method of the second aspect of the present invention.

In accordance with a fourth aspect of the present invention, there is provided a computer-readable storage medium storing a computer program which, when executed, causes a computer to perform the method of the second aspect of the present invention.

In accordance with a fifth aspect of the present invention, there is provided a computer program product which, when executed by a computer, causes the computer to perform the method of the second aspect of the present invention.

Compared to conventional art, embodiments of the present invention can achieve the following beneficial effects:
by interaction between the server, the vehicle terminal, and the car washer, detection of proper vehicle parking and inspection of vehicle hardware devices can be performed automatically; a user only needs to authorize the service, the whole car washing process can be completed, which relieves the user of the burden of paying excessive attention to the car washing process, and reduces complexity and risks of user operation.

### Brief Description of Drawings

In order to clearly illustrate the technical solutions in the embodiments of the present invention, brief description of the drawings pertinent to the embodiments will be provided. It should be apparent to a skilled person in the art that the drawings described below are for the purpose of illustrating embodiments of the invention only. The skilled person will be able to devise further drawings based on the provided drawings without exercising any inventive efforts.
FIG. 1 is a schematic structural diagram of an IoT based car washing system in accordance with an embodiment of the present invention;
FIG. 2 is a schematic structural diagram of another IoT based car washing system in accordance with an embodiment of the present invention;
FIG. 3 is a schematic structural diagram of yet another IoT based car washing system in accordance with an embodiment of the present invention;
FIG. 4 is a flowchart of a car washing method according to an embodiment of the present invention.

### Detailed Description

The technical solutions in the embodiments of the invention will now be described clearly and completely with reference to the accompanying drawings. The described embodiments merely show some but not all possible ways for implementing the invention. All other embodiments that persons of ordinary skills in the art could derive without inventive efforts fall within the scope of the disclosure.

It is to be noted that terms "comprising," "including" and any equivalent variations thereof, used in this disclosure are intended to cover the listed matters non-exclusively. For example, a process, method, system, product, or device that comprises a series of steps or units is not meant to include the listed steps or units only, but may optionally include other steps or units not listed or any steps or units inherent to such a process, method, system, product, or device.

The present invention discloses an IoT based car washing system and a car washing method, which can improve car washing efficiency and improve user experiences. Details are described below.

### Embodiment 1

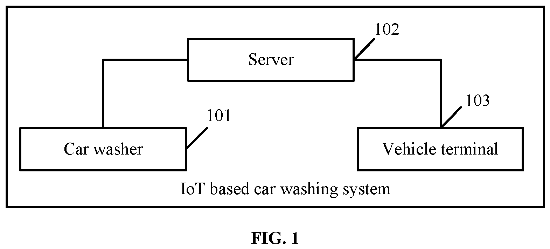

Reference is made to FIG. 1, which is a schematic structural diagram of an IoT based car washing system in accordance with an embodiment of the present invention. The car washing system may include a car washer 101, a server 102, and a vehicle terminal 103 equipped on a vehicle. The car washer, the server, and the vehicle terminal may transmit and receive data over wireless communication connections such as 5G networks, 4G networks, Wireless Local Area Networks (WLAN), Wide Area Networks (WAN) or Bluetooth connections.

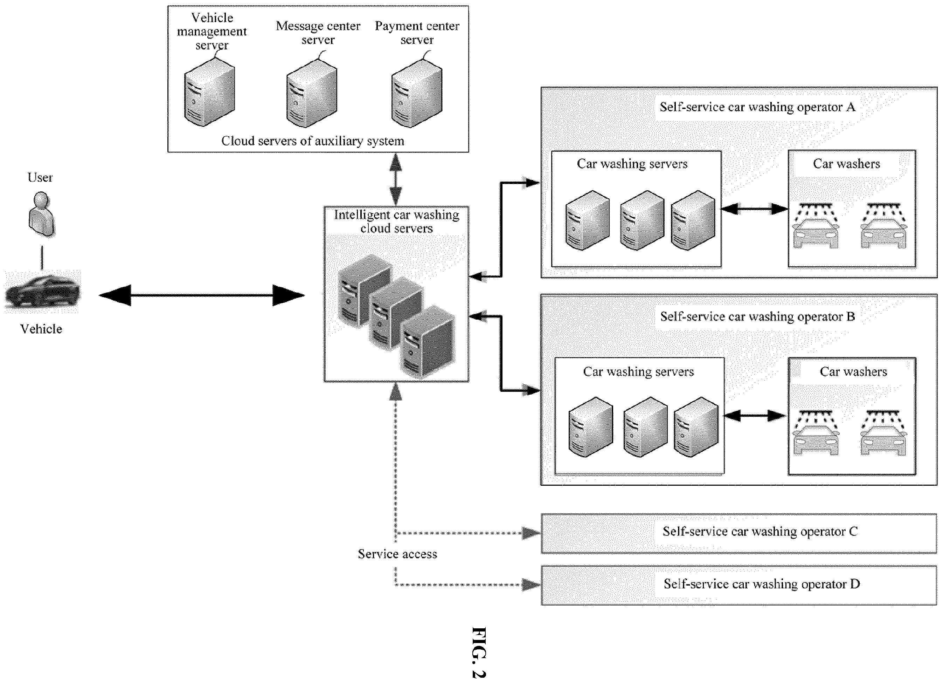

Reference is further made to FIG. 2, which is a schematic structural diagram of another IoT based car washing system according to an embodiment of the present invention. As shown in FIG. 2, the car washing system may include a car washer, a server, and a vehicle equipped with a vehicle terminal. The server may include a car washing server in the backend of a car washer, an intelligent car washing cloud server of an intelligent car washing platform, a cloud server of an auxiliary system, and the like; wherein the cloud server of the auxiliary system may include one or more of a vehicle management platform server for a vehicle management platform which stores vehicle information, a message center server for issuing and receiving messages, and a transaction center server for processing payments. The car washers and car washing servers in the backend of the car washers may belong to different car washing operators. Car washers and car washing servers belonging to the same car washer operators can be communicatively connected, and car washing servers belonging to different operators may be connected with an intelligent car washing cloud server of a car washing platform via a uniform interface.

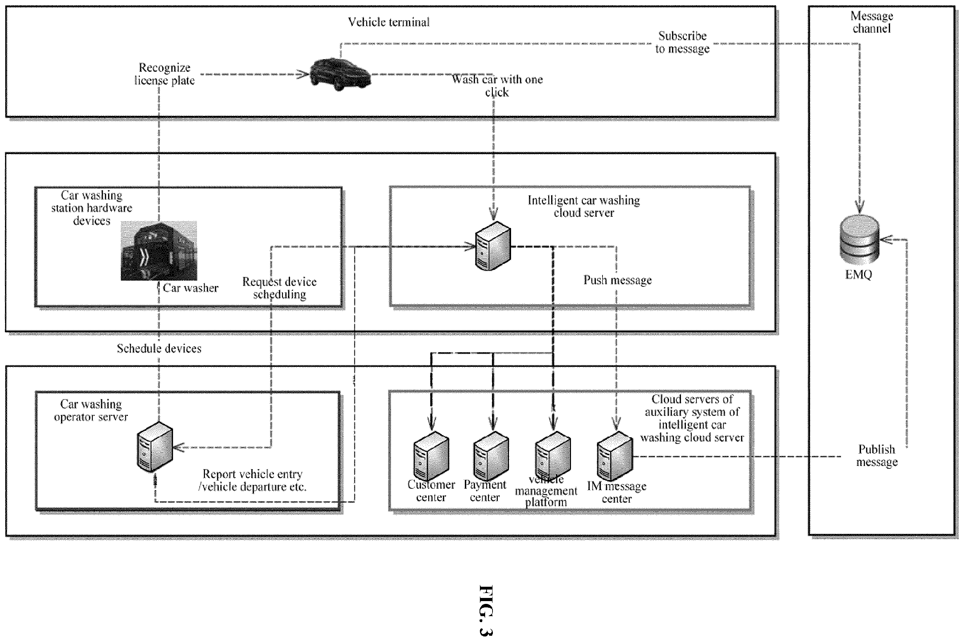

Please also refer to FIG. 3, which is a schematic structural diagram of yet another IoT based car washing system according to an embodiment of the present invention. As shown in FIG. 3, the car washing system may also include an Internet of Things message service platform (EMQ) through which the vehicle terminal may establish a message channel with the message center server so that various messages issued by the intelligent car washing cloud server to the message center server may be received.

Based on the system architecture shown in FIGS. 1, 2, and 3, the IoT-based car washing system of the present invention may perform the operations set out below.

The server 102 is configured to acquire a user account corresponding to a vehicle and to send a service authorization message to the vehicle terminal 103 corresponding to the user account.

In the embodiment, the server 102 may acquire the user account corresponding to the vehicle through the vehicle terminal 103 or through the car washer 101. In particular, the server 102 may acquire the user account entered by the user on the login page displayed by the vehicle terminal 103, or may identify the license plate number of the vehicle from an image of the license plate of the vehicle sent by the car washer 101 and then acquire the user account corresponding to the license plate number as the user account corresponding to the vehicle. The car washer 101 may be provided with a license plate recognition area and may use an infrared detection device or a ground sensing device to detect whether a vehicle has entered the license plate recognition area. When a vehicle enters the license plate recognition area, a camera of the car washer 101 is triggered to capture an image of its license plate.

The vehicle terminal 103 is configured to output and display a car washing page according to the service authorization message for the user to perform car washing service authorization on the car washing page.

In an embodiment of the invention, the car washing page may be an interaction interface of a car washing application. The car washing page may include an authorization page and a login page. The vehicle terminal 103 may detect whether any user account has signed in the car washing application; if yes, the car washing page output by the vehicle terminal 103 may include the authorization page only. The authorization page may include soft keys for confirming to proceed with the car washing service authorization to allow a user to perform service authorization by clicking on the soft keys. If no user account has signed in, the vehicle terminal 103 may first output a login page in the car washing page for the user to sign in with any user account and, after detecting that the user has signed in, output the authorization page in the car washing page for the user to perform a car washing service authorization in the authorization page.

The car washer 101 is configured to detect whether a vehicle has been parked into a car washing area preset by the car washer and, upon detecting that the vehicle has been parked in the car washing area, send a vehicle parking success message to the server 102.

In the embodiment, the car washing area is a designated work area inside the car washer 101, and car washing tools (water sprays, foam nozzles, brushes, dryers, etc.) of the car washer 101 are all arranged toward the work area. When a vehicle is parked in the car washing area, the operation ranges of the car washing tools may completely cover the whole car, thereby allowing satisfactory car washing results to be achieved. It is also possible to detect whether the vehicle has entered the car washing area by an infrared detection device or a ground sensing device of the car washer 101.

The server 102 is further configured to send a car washing preparation message to the vehicle terminal 103 upon detecting that the car washing service has been authorized and a vehicle parking success message sent by the car washer 101 has been received.

The vehicle terminal 103 is further configured to, after receiving the car washing preparation message, detect whether the hardware devices of the vehicle are in car washing preparation states and send a safety check success message to the server 102 upon detecting that the hardware devices are in the car washing preparation states.

In the embodiment of the present invention, the hardware devices of the vehicle may include devices that may be electronically controlled, such as windows, rear-view mirrors, wipers, etc., as well as devices that not electronically controlled, such as doors, bonnet cover, trunk, charging port flat, etc. The vehicle terminal may perform inspection over the two types of hardware devices. Specifically, car washing preparation states of the hardware devices described above may include closed state of windows, wipers, doors, bonnet cover, trunk, charging port flap, etc. and fold-up state of rear-view mirrors.

The server 102 is further configured to send a car washing request message to the car washer 101 upon receipt of the safety check success message.

The car washer 101 is further configured to start a car washing service for the vehicle upon receipt of the car washing request message.

Through interaction between the server, the vehicle terminal, and the car washer, the IoT-based car washing system disclosed by the embodiments of the present invention can automatically perform detection of proper vehicle parking and inspection of vehicle hardware devices; a user only needs to authorize the service, the whole car washing process can be completed, which relieves the user of the burden of paying excessive attention to the car washing process, and reduces complexity and risks of user operation.

### Embodiment 2

Reference is still made to the system architecture shown in FIGS. 1, 2, and 3. In an IoT based car washing system of the embodiment of the present invention, the car washer 101 may be configured to perform the following operations:
1. Upon detecting entry of the vehicle into the predetermined license plate recognition area, capturing an image of the license plate of the vehicle and sending the image of the license plate to the server.
   In a preferred embodiment, the car washer may identify the license plate number from the image of the license plate via the car washing server, thereby allowing the intelligent car washing cloud server to identify a user account corresponding to the vehicle based on the license plate number. In particular, the car washing server may invoke a license plate number reporting interface of the intelligent car washing cloud server. The parameters of the license plate number reporting interface are as follows:
   Request parameters: car washer ID, license plate number;
   Response parameters: Status Code.

   The car washer ID is the identity of the car washer which currently detects vehicle entry; the license plate number is the number identified by the car washing server from the image of the license plate. Accordingly, the intelligent car washing cloud server may indicate, via the Status Code, whether information such as the car washer ID and the license plate number sent by the car washing server has been successfully received.
2. Determining whether the vehicle has been parked in the car washing area preset by the car washer; and if yes, sending a vehicle parking success message to the server; if not, sending a vehicle parking failure message to the server.
   In a preferred embodiment, while the car washer detects whether a vehicle has been parked in the car washing area, the car washer may invoke a parking detection result reporting interface of the intelligent car washing cloud server through the car washing server and continuously send notification messages to the intelligent car washing cloud server. The parameters of the parking detection result reporting interface are as follows:
   Request parameters: car washer ID, license plate number of the vehicle, parking status (parked in / not yet reached / passed the car washing area), a driving assistance message corresponding to parking status;
   Response parameters: Status Code.

   When the notification message is a vehicle parking success message as described above, content of the parameter parking status may be parked in the car washing area. When the notification message is a vehicle parking failure messaged described above, content of the parameter parking status may be not yet reached / passed the car washing area. Accordingly, the Status Code in the intelligent car washing cloud server feedback may be configured to indicate whether a notification message sent by the car washer has been received.
3. Starting a car washing service upon receipt of the car washing request message.
4. Reporting car washing progress information of the car washing service to the server in real time in the course of the car washing service.
   In a preferred embodiment, the car washer may invoke a car washing progress real-time reporting interface of the intelligent car washing cloud server via the car washing server and report the car washing progress to the intelligent car washing cloud server. The parameters of the car washing progress real-time reporting interface are as follows:
   Request parameters: car washer ID, license plate number, time used, time remaining, current service step;
   Response parameters: Status Code.

   The car washer ID is the identity of the car washer that is currently performing the car washing service; the time used is the time that the car washing service has been in progress; the time remaining may be determined based on an estimated service time of the current car washing service and the time used; the current service step may be any one of the steps in the car washing process, such as high pressure water spray, foam application, rinsing and scrubbing, wax application, and drying.
4. At the end of the car washing service, sending a service completion message to the server.
   In a preferred embodiment, the car washer may invoke a car washing result reporting interface of the intelligent car washing cloud server via the car washing server and report the car washing result to the intelligent car washing cloud server. The parameters of the car washing result reporting interface are as follows:
   Request parameters: car washer ID, license plate number, car washing service order number, service time required, service completion time, service result (normal completion, user emergency stop, device failure, etc.), service completion message.
   Response parameters: Status Code.

   The Status Code may be used to indicate whether the intelligent car washing cloud server has received car washing results reported by the car washing server. Further, the intelligent car washing cloud server may store the received car washing results as local data to allow subsequent inquiries.
5. Detecting whether the vehicle has exited the car washing area and, upon detecting the vehicle exiting the car washing area, sending a vehicle departure message to the server.

In a preferred embodiment, the car washer may invoke a vehicle departure reporting interface of the intelligent car washing cloud server via the car washing server and send a vehicle departure message to the intelligent car washing cloud server. The parameters of the vehicle departure reporting interface are as follows:
Request parameters: car washer ID, license plate number, departure time;
Response parameters: Status Code.

The Status Code may be used to indicate whether the intelligent car washing cloud server has received a vehicle departure message reported by the car washing server. The parameters included in the vehicle departure message are the request parameters described above.

The server 102 may be configured to perform the following operations:
1. Acquiring a user account corresponding to the vehicle by identifying the license plate in the image of the license plate sent by the car washer 101 and sending a service authorization message to a vehicle terminal corresponding to the user account;
2. Sending a car washing preparation message to the vehicle terminal 103 upon detecting that the car washing service has been authorized and that a vehicle parking success message sent by the car washer 101 has been received;
3. When receiving a vehicle parking failure message sent by the car washer 101, forwarding the vehicle parking failure message to the vehicle terminal 103;
4. Creating a car washing order for the car washing service after receiving the safety check success message sent by the vehicle terminal 103, deducting a fee from a deposit account associated with the user account according to the car washing order, and sending a car washing request message to the car washer 101 when the fee deduction is successful.
   In a preferred embodiment, the intelligent car washing cloud server is configured to, after receiving the safety check success message, forward the safety check success message to the car washing server to cause the car washing server to create a car washing order for the car washing service. The intelligent car washing cloud server may invoke a vehicle device inspection result push interface of the car washing server and send the safety check success message to the car washing server. The parameters of the vehicle device inspection result push interface are as follows:
   Request parameters: car washer ID, license plate number, car washing order, device detection result;
   Response parameters: Status Code.

   The car washing server may create a car washing order based on a car washing order number sent by the intelligent car washing cloud server to establish a connection to a car washing order corresponding to the car washing service. When the intelligent car washing server sends the safety check success message to the car washing server, the content of the parameter device detection result described above is device safety check success. In this embodiment, the safety check success message is pushed by the intelligent car washing cloud server to the car washing server rather than inspecting the hardware device status of the vehicle by the car washing server directly. This may allow provision of liability free support to third-party car washer operators.
   In addition, after the car washing order is created, a fee deduction may be performed by the intelligent car washing cloud server in accordance with the car washing order. The car washing order, the payment result, the package ID, etc. may be synchronized to the car washing server by invoking a payment result push interface of the car washing server. This allows subsequent periodic settlement and reconciliation, or the like. The parameters of the payment result push interface are as follows:
   Request parameters: car washer ID, license plate number, car washing order, order value, package ID;
   Response parameters: Status Code.

   The Status Code is used to indicate whether the car washing server receives the car washing order and the payment result.
   In another preferred embodiment, the intelligent car washing cloud server may be configured to invoke an operation request access interface of the car washing server and cause the car washing server to trigger the car washer to perform corresponding operations. The parameters of the operation request access interface are as follows:
   Request parameters: car washer ID, license plate number, car washing order, operation type (start, emergency stop);
   Response parameters: Status Code.

   The Status Code is used to indicate whether the car washing server receives the operation request. When the operation request is the car washing request message described above, the content of the parameter operation type is start. In addition, in the event of emergency conditions during car wash (e.g., a child on board the vehicle opens a door or window), an operation request for emergency stop may be sent through the operation request access interface to control the car washer to stop the current car washing service by the car washing server.
5. Searching for at least one car washing service package corresponding to the car washer 101 when receiving the car washing service package query sent by the vehicle terminal 103 and send at least one car washing service package to the vehicle terminal 103.
   In a preferred embodiment, the car washing service package query sent by a vehicle terminal may be received by an intelligent car washing cloud server. As there may be different car washer operators, the intelligent car washing cloud server may search for at least one car washing service package corresponding to the car washer by invoking a car washing package list query interface of the car washing server. The parameters of the car washing package list query interface of the car washing server are as follows:
   Request parameters: car washer ID, license plate number;
   Response parameters: Status Code, package list (package ID, package name, original price, sale price).
6. If the target service package sent by the vehicle terminal 103 is received, the server 102 may perform the creation of the car washing order for the car washing service described at point 4 above by creating a car washing order for the car washing service corresponding to the target service package.
7. Synchronizing the car washing progress information reported by the car washer 101 to the vehicle terminal 103 for display.
8. Forwarding the service completion message upon receipt of the service completion message sent by the car washer.
9. Updating status of the car washing order corresponding to the car washing service upon receipt of the vehicle departure message sent by the car washer 101.
10. When receiving the car washing point search message sent by the vehicle terminal 103, searching for nearby car washing points with a distance from the location of the vehicle less than a preset threshold distance and sending information of the nearby car washing points to the vehicle terminal 103. In a preferred embodiment, the server may also query a recommendation system for car washing points, receive recommended car washing points returned by the recommendation system, identify repeats between the recommended car washing points and the nearby car washing points, and send information of the repeated car washing points to the vehicle terminal 103.

The vehicle terminal 103 may be configured to perform the following operations:
1. Outputting a car washing page for display according to the service authorization message to allow a user to perform car washing service authorization on the car washing page;
2. Detecting whether the hardware devices of the vehicle are in car washing preparation states upon receipt of a car washing preparation message, and sending a safety check success message to the server upon detection that the hardware devices are in the car washing preparation states;
3. Outputting a driving assistance message for guiding the user to drive the vehicle into the car washing area upon receipt of a vehicle parking failure message, and outputting a parking reminder message to remind the user to control the vehicle to enter the parking state upon receipt of the car washing preparation message;
4. When receiving the car washing preparation message, sending a car washing service package query to the server 102, outputting at least one car washing service package sent by the server 102 for display, detecting a target service package selected from the at least one car washing service package by the user, and sending the target service package to the server 102.
   In the embodiment, the vehicle terminal may access a car washing service package query interface provided by the intelligent car washing cloud server to search for car washing service packages. The parameters of the car washing service package query interface are as follows:
   Request parameters: random password authCode, license plate number;
   Response parameters: Status Code, package ID, package name, service time required, original price, actual price.

   The vehicle terminal may send the authCode to the server through the car washing service package query interface as credentials for the authentication, while the server may acquire the user account corresponding to the vehicle via the license plate number sent by the vehicle terminal. The intelligent car washing cloud server may indicate, by the Status Code, whether it has received a car washing service package query sent by the vehicle terminal through the car washing service package query interface. The intelligent car washing cloud server may return at least one car washing service package in response to the car washing service package query. Information of the car washing service package may include a package ID, a package name, service time required, an original price, and an actual price.
   In a preferred embodiment, upon detecting the user selected target service package and detecting that the hardware devices are in the car washing preparation states, the vehicle terminal may invoke a car washing start interface of the intelligent car washing cloud server to cause the car washer to start the car washing service. The parameters of the car washing start interface are as follows:
   Request parameters: random password authCode, license plate number, vehicle model number, package ID;
   Response parameters: Status Code, expected service required time.

   The package ID sent by the vehicle terminal is the ID of the target service package. Because time required for car wash differs between different car washing service packages and sizes of different vehicle models affect the travel distance of the car washers, the server may calculate estimated service time required for the car washing service corresponding to the target service package in real time based on the vehicle model sent by the vehicle terminal and the package ID of the target service package. Further, the intelligent car washing cloud server may generate a car washing request message according to the request parameters sent by the vehicle terminal through the car washing start interface and invoke the operation request access interface of the car washing server to send the car washing request message.
5. Synchronizing and displaying car washing progress information in the course of the car washing service.
   In the embodiment of the present invention, the vehicle terminal may display countdown of the car washing progress after the estimated service time required returned by the intelligent car washing cloud server has been acquired.
6. Outputting a departure reminder message to remind the user to drive the vehicle away after receiving a service completion message forwarded by the server 102.
7. Receiving and outputting information of at least one car washing point sent by the server 102, detecting a target car washing point selected by the user from the at least one car washing point, and navigating according to a location of the target car washing point and the location of the vehicle to allow the vehicle to travel to the target car washing point based on navigation information.

In the embodiment of the present invention, by invoking different interfaces provided by the intelligent car washing cloud server and the car washing server, the car washing system may automatically complete user account authentication, car washing package queries, detection of proper vehicle parking, car washing progress synchronization, car washing result report, vehicle departure report, payment result push, car washing start, etc. In the whole car washing process, a user only needs to select and confirm a car washing package. This relieves the user of the burden of paying excessive attention to the car washing process, and reduces complexity and risks of user operation.

### Embodiment 3

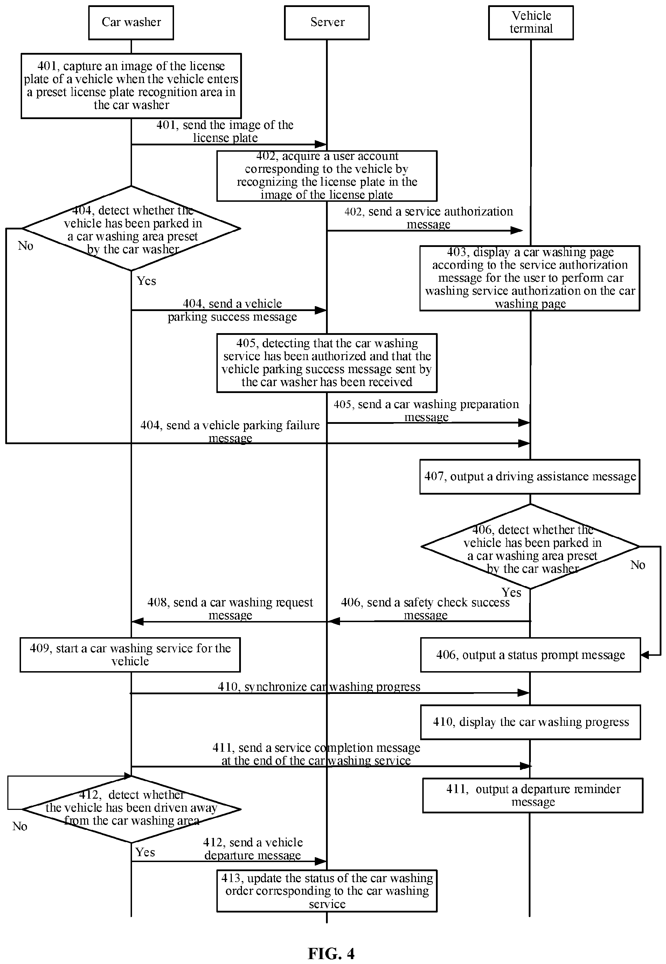

Reference is made to FIG. 4, which is a flowchart illustrating a car washing method according to an embodiment of the present invention. As shown in FIG. 4, the car washing method may include the following steps:
401. The car washer captures an image of the license plate of the vehicle and sends the image of the license plate to the server when the vehicle enters a preset license plate recognition area in the car washer.

In the embodiment, the location of the car washer may be queried in the following manner before the vehicle enters the car washer:
When receiving the car washing point search message sent by the vehicle terminal, the server may search for nearby car washing points with a distance from the location of the vehicle less than a preset threshold distance and send information of the nearby car washing points to the vehicle terminal. The server may also query a recommendation system for car washing points, receive recommended car washing points returned by the recommendation system, identify repeats between the recommended car washing points and the nearby car washing points, and send information of the repeated car washing points to the vehicle terminal.

The vehicle terminal receives and outputs at least one car washing point sent by the server, detects a target car washing point determined by the user from the at least one car washing point, and navigates based on the location of the target car washing point and the location of the vehicle to cause the vehicle to travel to the target car washing point according to the navigation information.

402. The server acquires a user account corresponding to the vehicle by identifying the license plate in the image of the license plate and sends a service authorization message to a vehicle terminal corresponding to the user account.

403. The vehicle terminal displays a car washing page according to the service authorization message for the user to perform car washing service authorization on the car washing page.

404. The car washer detects whether the vehicle has been parked in a car washing area preset by the car washer, and if so, sends a vehicle parking success message to the server, if not, sends a vehicle parking failure message to the server.

405. The server sends a car washing preparation message to the vehicle terminal upon detecting that the car washing service has been authorized and that a vehicle parking success message sent by the car washer has been received, and upon receipt of the vehicle parking failure message, forwards the vehicle parking failure message to the vehicle terminal.

406. The vehicle terminal, upon receipt of a car washing preparation message, detects whether the hardware devices of the vehicle are in car washing preparation states, and if yes, sends a safety check success message to the server, if not, outputs a status prompt message.

In a preferred embodiment, when the vehicle terminal receives the car washing preparation message, the vehicle terminal may also output a parking reminder message to remind the user to control the vehicle to enter a parking state.

407. The vehicle terminal outputs a driving assistance message for guiding the user to drive the vehicle into the car washing area upon receipt of the vehicle parking failure message.

408. The server sends a car washing request message to the car washer when a safety check success message is received. In addition, in a preferred embodiment, the following steps may also be performed after the vehicle terminal receives the car washing preparation message:
the vehicle terminal sends a car washing service package query to the server;
the server, upon receipt of the car washing service package query sent by the vehicle terminal, searches for at least one car washing service package corresponding to the car washer and sends the at least one car washing service package to the vehicle terminal;
the vehicle terminal outputs the at least one car washing service sent by the server for display, detects the target service package selected by the user from the at least one car washing service package, and sends the target service package to the server; and
the server creates a car washing order for the car washing service corresponding to the target service package, and charges a deposit account associated with the user account according to the car washing order.

Accordingly, the step 408 described above may be implemented in this manner:
the server sends a car washing request message to the car washer when a safety check success message is received and a fee deduction from the deposit account is successful.

409. The car washer starts a car washing service for the vehicle upon receipt of the car washing request message.

410. The car washer reports car washing progress information of the car washing service to the server in real time in the course of the car washing service, and the car washing progress information is synchronized to the vehicle terminal by the server for display.

411. At the end of the car washing service, the car washer sends a service completion message to the server, which forwards the service completion message to the vehicle terminal to cause the vehicle terminal to output a departure reminder message for reminding the user to drive the vehicle away.

412. The car washer detects whether the vehicle has been driven away from the car washing area, and if yes, sends a vehicle departure message to the server, if no, repeats step 412.

413. The server, upon receipt of the vehicle departure message, updates the status of the car washing order corresponding to the car washing service.

In the method described in FIG. 4, by the information exchange between the car washer, the server and the vehicle terminal, a convenient, safe and efficient car washing service can be provided to a user through automatic detection of various hardware states and efficient interaction throughout the car washing process from vehicle entry into the car washer to vehicle departure.

In addition, there is provided a computer-readable storage medium storing a computer program, wherein execution of the computer program causes a computer to perform the car washing method shown in FIG. 4.

There is also provided a computer program product comprising a non-transitory computer readable storage medium storing a computer program, and the computer program is operable to cause a computer to perform the car washing method shown in FIG. 4.

It should be understood that references throughout the specification to "one embodiment" or "an embodiment" mean that a particular feature, structure, or characteristic described in connection with the embodiment is included in at least one embodiment of the present invention. Thus, the phrases "in one embodiment" or "in an embodiment" used in various passages throughout this specification are not necessarily all referring to the same embodiment. Furthermore, the particular features, structures, or characteristics may be combined in any suitable manner in one or more embodiments. It should also be appreciated by those skilled in the art that the embodiments described in the specification are merely preferred embodiments and that the actions and modules involved are not necessarily required by the present invention.

In various embodiments of the present invention, it should be understood that the order of the sequence numbers of the processes described above is not meant to imply the necessary ordering in which the processes are performed. Rather the ordering of the processes should be determined by their functions and inherent logics. The order of the sequence numbers should not be construed as any limitation on the scope of the embodiments of the present invention.

The units described above as separate components may or may not be physically separate, components illustrated as units may or may not be physical units, and they be present in one place or distributed across multiple network units. Some or all of the units may be selected in accordance with actual needs in order to achieve the purpose of the embodiments of the disclosure.

Furthermore, the various functional units may be integrated in one processing unit, or may physically exist as separate units, or two or more units may be integrated in one unit. The aforementioned integrated units may be implemented in the form of hardware or software functional units.

The aforementioned integrated units may be stored in a computer accessible memory when implemented in the form of a software functional units and sold or used as a standalone product. Based on such understanding, the technical solution of the present invention in essence, or all or part of the technical solution that contributes to the state of the art, may be embodied in the form of a software product. The software product may be stored on a memory device and includes a number of instructions to cause a computer device (which may be a personal computer, server, or network device, or the like, particularly a processor in a computer device) to perform some or all of the steps of the methods of the various embodiments of the invention as described above.

Those of ordinary skills in the art will appreciate that all or some of the steps of the various methods of the embodiments described above may be accomplished by relevant hardware under instructions of a computer program. The computer program may be stored in a computer-readable storage medium such as read-only memory (ROM), random-access memory (RAM), programmable read-only memory (PROM), erasable programmable read-only memory (EPROM), one-time programmable read-only memory (OTPROM), electrically erasable programmable read-only memory (EEPROM), compact-disc read-only memory (CD-ROM) or other optical disk storage device, magnetic disk storage device, magnetic tape storage device, or any other medium that can be used to carry or store data.

The present invention has been described in detail with respect to an IoT based car washing system and a car washing method. While specific examples have been described herein to illustrate the principles and embodiments of the invention, the description of the examples is provided solely to facilitate understanding of the principles of the invention and its core concept. It will be apparent to those skilled in the art that various changes may be made to the specific embodiments and applications based on the principle of the present invention, and that the present specification should not be construed as limiting the invention.

## Claims

1. An Internet of Things (IoT) based car washing system, comprising a vehicle terminal installed on a vehicle, a car washer, and a server, **characterized in that**:
the server is configured to acquire a user account corresponding to the vehicle and to send a service authorization message to a vehicle terminal corresponding to the user account;
the vehicle terminal is configured to output and display a car washing page according to the service authorization message for a user to perform authorization of a car washing service on the car washing page;
the car washer is configured to detect whether the vehicle has been parked in a car washing area preset by the car washer and, upon detecting that the vehicle has been parked in the car washing area, to send a vehicle parking success message to the server;
the server is further configured to send a car washing preparation message to the vehicle terminal upon detecting that the car washing service has been authorized and that a vehicle parking success message sent by the car washer has been received;
the vehicle terminal is further configured to, upon receiving the car washing preparation message, detect whether hardware devices of the vehicle are in car washing preparation states, and upon detecting that the hardware devices are in the car washing preparation states, send a safety check success message to the server;
the server is further configured to send a car washing request message to the car washer upon receipt of the safety check success message; and
the car washer is further configured to start the car washing service for the vehicle upon receipt of the car washing request message.

2. The system of claim 1, wherein:
the car washer is further configured to capture an image of a license plate of the vehicle and send the image of the license plate to the server upon detecting entry of the vehicle into a predetermined license plate identification area; and
the server is configured to acquire the user account corresponding to the vehicle by recognizing the license plate in the image of the license plate.

3. The system of claim 1, wherein:
the car washer is further configured to send a vehicle parking failure message to the server upon detecting that the vehicle is not parked in the car washing area;
the server is further configured to, upon receiving the vehicle parking failure message, forward the vehicle parking failure message to the vehicle terminal; and
the vehicle terminal is further configured to, upon receiving the vehicle parking failure message, output a driving assistance message for guiding the user to drive the vehicle into the car washing area, and upon receiving the car washing preparation message, output a parking reminder message for reminding the user to control the vehicle to enter a parking state.

4. The system of claim 1, wherein the server is further configured to:
after receiving the safety check success message sent by the vehicle terminal, and prior to sending a car washing request message to the car washer, create a car washing order for the car washing service; and
deduct a fee from a deposit account associated with the user account based on the car washing order, and, when the fee deduction is successful, perform the operation of sending a car washing request message to the car washer.

5. The system of claim 4, wherein:
the vehicle terminal is further configured to send a car washing service package query to the server upon receipt of the car washing preparation message;
the server is further configured to query at least one car washing service package corresponding to the car washer and send the at least one car washing service package to the vehicle terminal upon receiving a car washing service package query sent by the vehicle terminal;
the vehicle terminal is further configured to output the at least one car washing service package for display, detect a target service package selected by the user from the at least one car washing service package, and send the target service package to the server; and
the server is configured to create the car washing order for the car washing service by creating a car washing order for the car washing service corresponding to the target service package.

6. The system of any one of claims 1-5, wherein:
the car washer is configured to report car washing progress information of the car washing service to the server in real time in the course of the car washing service; and
the server is configured to synchronize the car washing progress information to the vehicle terminal for display.

7. The system of claim 6, wherein:
the car washer is further configured to send a service completion message to the server at the end of the car washing service; and
the vehicle terminal is further configured to receive the service completion message forwarded by the server, and upon receiving the service completion message, output a departure reminder message to remind the user to drive the vehicle away.

8. The system of claim 7, wherein:
the car washer is further configured to detect whether the vehicle has exited the car washing area, and, upon detecting the vehicle exiting the car washing area, send a vehicle departure message to the server; and
the server is further configured to, upon receiving the vehicle departure message, update a status of the car washing order corresponding to the car washing service.

9. The system of any one of claims 1-8, wherein:
the vehicle terminal is further configured to send a car washing point search message to the server upon detecting a car washing point search command entered by the user;
the server is further configured to, upon receiving a car washing point search message sent by the vehicle terminal, search for nearby car washing points with a distance from the vehicle's current location smaller than a preset threshold distance and send information of the nearby car washing points to the vehicle terminal, wherein the vehicle's current location is reported by the vehicle terminal; and
the vehicle terminal is further configured to receive and output information of at least one car washing point sent by the server and detect a target car washing point selected by the user from the at least one car washing point, and navigate according to a location of the target car washing point and the vehicle's current location to allow the vehicle to travel to the target car washing point based on navigation information.

10. A car washing method, **characterized by**:
acquiring, by a server, a user account corresponding to a vehicle and sending a service authorization message to a vehicle terminal corresponding to the user account;
outputting and displaying, by the vehicle terminal, a car washing page according to the service authorization message for a user to perform authorization of a car washing service on the car washing page;
detecting, by a car washer, whether the vehicle has been parked in a car washing area preset by the car washer and, if so, sending a vehicle parking success message to the server;
sending, by the server, a car washing preparation message to the vehicle terminal upon detecting that the car washing service has been authorized and that a vehicle parking success message sent by the car washer has been received;
detecting, by the vehicle terminal, upon receiving the car washing preparation message, whether hardware devices of the vehicle are in car washing preparation states and, if so, sending a safety check success message to the server;
sending, by the server, a car washing request message to the car washer upon receipt of the safety check success message; and
starting, by the car washer, the car washing service for the vehicle upon receipt of the car washing request message.
